# EUROPÄISCHE PATENTSCHRIFT

(11) **EP 2 397 219 B1**
(45) Veröffentlichungstag und Bekanntmachung des Hinweises auf die Patenterteilung: **11.05.2016**
(21) Anmeldenummer: 11004766.9
(22) Anmeldetag: 10.06.2011
(51) Int. Cl.: B01F 3/04, B01F 5/04, B01F 5/06, A47J 31/44, B05B 7/00

(54) **Vorrichtung zum Schäumen einer Flüssigkeit**
Device for foaming a liquid
Dispositif de moussage d'un liquide

(30) Priorität: 15.06.2010 DE 102010023781
(43) Veröffentlichungstag der Anmeldung: 21.12.2011
(73) Patentinhaber: Barth, Volker, 63067 Offenbach am Main (DE)
(72) Erfinder: Barth, Volker, 63067 Offenbach am Main (DE)
(74) Vertreter: Dimmerling & Huwer

(56) Entgegenhaltungen:
- EP-A1- 1 428 580
- WO-A2-2008/055845
- DE-A1-102005 060 181
- DE-A1-102006 014 814
- DE-A1-102008 058 934
- GB-A- 830 296
- GB-A- 2 322 064
- US-A- 5 071 379
- US-A1- 2007 023 454
- US-B1- 6 202 541

## Beschreibung

Die Erfindung betrifft eine Vorrichtung zum Schäumen einer Flüssigkeit nach dem Oberbegriff des Anspruchs 1.

Eine derartige Vorrichtung ist beispielsweise aus der DE 10 2008 058 934 A1 bekannt. Bei der bekannten Vorrichtung ist in der Auslassdüse ein Sieb angeordnet, durch welches die bereits geschäumte Flüssigkeit durchtritt. Hierdurch werden die im Schaum enthaltenen großen Luftblasen zerstört und es bilden sich in Abhängigkeit der Maschenweite des Siebes kleine Luftblasen. Durch die kleinen Luftblasen entsteht ein stabiler Schaum, der äußerst langsam zerfällt. Mittels eines Siebes, welches aus mehreren übereinander angeordneten Lagen besteht, kann ein sehr feinporiger Schaum erzeugt werden.

Wenngleich mittels der bekannten Vorrichtung auch ein qualitativ hochwertiger Schaum herstellbar ist, so wurde er vom Erfinder dennoch als verbesserungswürdig angesehen.

Aus DE 10 2005 060 181 A1 ist ferner ein Überkopfschauniapplikator für eine Körperpflege- oder Reinigungsflüssigkeit bekannt. Der Überkopfschaumapplikator weist ein Luftanreichungselement auf, mittels welchem eine Flüssigkeit mit Luft durchsetzbar ist. Die Vorrichtung hat eine Auslässdüse, aus der die mit Luft durchsetze Flüssigkeit austritt- Die Auslassdüse weist ein Element auf, das aus einem porösen Material besteht und Durchlässe hat, welche in wenigstens zwei in Fließrichtung der Flüssigkeit in einem Abstand hintereinander angeordneten Ebenen angeordnet sind.

Es ist Aufgabe der Erfindung, eine eingangs genannte Vorrichtung derart auszubilden, dass die Qualität des Schaumes erhöht wird und das poröse Element eine hohe Standzeit ermöglicht.

Die Lösung dieser Aufgabe ergibt sich aus den Merkmalen des Anspruchs 1. Vorteilhafte Weiterbildungen der Erfindung ergeben sich aus den Unteransprüchen.

Dadurch, dass die Auslassdüse ein Element aufweist, welches Durchlässe hat, welche in wenigstens zwei in Fließrichtung der Flüssigkeit hintereinander angeordneten Ebenen angeordnet sind, wird ein Schaum erreicht, der eine extrem hohe Qualität hat. Es hat sich gezeigt, dass insbesondere dadurch, dass die geschäumte Flüssigkeit durch Durchlässe hindurch tritt, die in wenigstens zwei in Fließrichtung der Flüssigkeit in einem Abstand hintereinander angeordneten Ebenen angeordnet sind, eine deutliche Qualitätsverbesserung des Schaums erreicht wird. Insbesondere wenn der Abstand 1 bis 4 Millimeter, insbesondere 2 bis 3 Millimeter, vorzugsweise 3,5 Millimeter beträgt.

Als sehr vorteilhaft hat sich herausgestellt, dass das Element aus einem porösem Material besteht. Durch den porösen Aufbau des Elements sind die Durchlässe zwar nicht nur in definierten Ebenen angeordnet sondern befinden sich teilweise auch zwischen den Ebenen, jedoch hat dies keine nachteiligen Auswirkungen sondern wirkt sich sogar günstig auf die Schaumbildung aus. Ein poröses Element, in dem die Poren exakt in Ebenen angeordnet wären, würde jedoch schon zur Erreichung der erfindungsgemäßen Vorteile genügen.

Die antibakteriellen Eigenschaften des Elements sind insbesondere dann vorteilhaft, wenn Milch geschäumt wird. Durch die antibakterielle Eigenschaften erhöht sich die Standzeit des Elements deutlich.

Durch den porösen Aufbau des Elements sind die Durchlässe zwar nicht nur in definierten Ebenen angeordnet sondern befinden sich teilweise auch zwischen den Ebenen, jedoch hat dies keine nachteiligen Auswirkungen sondern wirkt sich sogar günstig auf die Schaumbildung aus. Ein poröses Element, in dem die Poren exakt in Ebenen angeordnet wären, würde jedoch schon zur Erreichung der erfindungsgemäßen Vorteile genügen.

In vorteilhafter Weise beträgt die Porenweite 5 bis 500 Mikrometer, insbesondere 45 bis 300 Mikrometer, vorzugsweise 70 bis 100 Mikrometer. Die Porenweite ist dadurch definiert, dass Kugelförmige Elemente entsprechenden Durchmessers durch die Poren hindurch treten können.

Bevorzugt enthält das poröse Element einen porösen Werkstoff und Silberpartikel. Dabei können die Silberpartikel an der Oberfläche des porösen Werkstoffs, insbesondere in den Poren angeordnet sein. Dadurch ergibt sich ein poröses Element mit guten antibakteriellen Eigenschaften.

In vorteilhafter Weise besteht das Element im Wesentlichen aus porösen Kunststoff, wie beispielsweise Polyethylen, dem zur Erreichung antibakterielle Eigenschaften ein antibakterieller Wirkstoff wie beispielsweise Silber beigefügt wurde.

Bei einer Weiterbildung der Erfindung enthält das poröse Element Aktivkohle. Über die Aktivkohle können die Silberpartikel besser an dem porösen Werkstoff anhaften, insbesondere wenn der poröse Werkstoff ein Kunststoff ist.

Bei einer vorteilhaften Ausgestaltung der Erfindung besteht das Element aus thermoplastischer Stärke, einem Zellulosewerkstoff, Polymilchsäure, Polyhydroxybuttersäure und/oder einem auf der Basis von Zuckern hergestellten Kunststoff. Das Element kann dann nach dem Gebrauch umweltfreundlich entsorgt werden, weil die nach dem Gebrauch in und/oder an dem Element zurückbleibenden Milchsäurebakterien des Milchschaums das Element biologisch zersetzen. Eine besonders schnelle und nahezu vollständige Zersetzung kann erreicht werden, wenn das Element aus porösem Kunststoff besteht, der auf der Basis von Zuckern hergestellt wurde. Bei dem Zucker kann es sich insbesondere um Lactose, Sacherose, Glucose oder Dextrose oder deren Mischungen beziehungsweise synthetisch hergestellten Derivaten handeln. Der Kunststoff kann auch auf der Basis von Lactaten hergestellt sein. Mit den vorgenannten Werkstoffen ermöglichen auch antibakterielle Eigenschaften des Elements.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine schematische Blockdarstellung einer erfindungsgemäßen Vorrichtung,
- Fig. 2: eine erste Ausführungsform eines in der Auslassdüse der in Figur 1 dargestellten Vorrichtung angeordneten erfindungsgemäßen Elements von der Seite,
- Fig. 3: einen Schnitt entlang der Schnittlinien A-A des in Figur 2 dargestellten Elements, und
- Fig. 4: einen zweiten Schnitt entlang der Schnittlinien B-B des in Figur 2 dargestellten Elements.

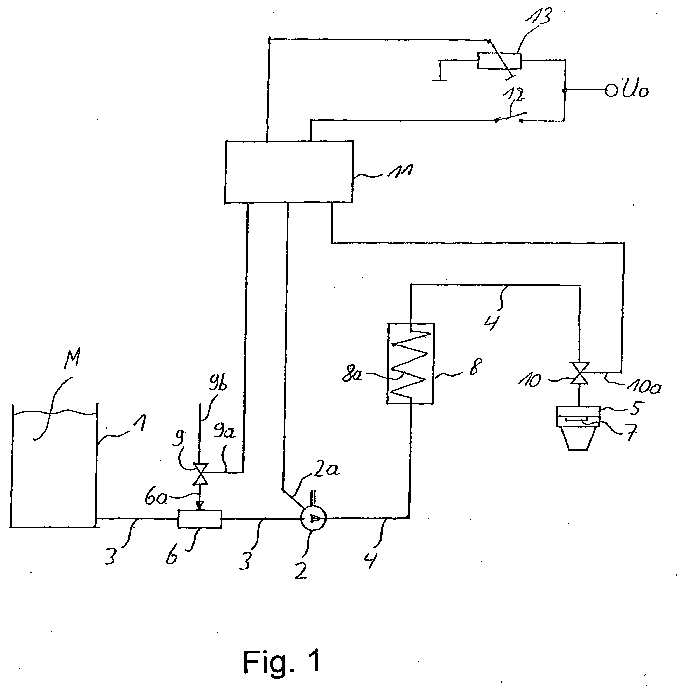

Wie Figur 1 entnommen werden kann, ist in dem Vorratsbehälter 1 Milch M enthalten. Die Milch M kann im Vorratsbehälter 1 auf etwa 6 Grad Celsius gekühlt werden, um Bakterienbildung zu vermeiden.

Der Vorratsbehälter 1 ist über eine erste Leitung 3 mit einer Pumpe 2 verbunden. Die Pumpe 2 ist an ihrer Druckseite über eine zweite Leitung 4 mit einer Auslassdüse 5 verbunden. Daher kann mittels der Pumpe 2 Milch M aus dem Behälter 1 der Auslassdüse 5 zugeführt werden.

In der ersten Leitung 3 ist eine Venturi-Düse 6 angeordnet. In der Luftzuführleitung 6a der Venturi-Düse 6 ist ein einstellbares Ventil 9 angeordnet. Der der Venturi-Düse 6 abgewandte Anschluss des Ventils 9 ist mit einer Leitung 9b verbunden, deren Einlassöffnung derart angeordnet ist, dass keine verschmutzte Luft angesaugt wird. In der Leitung 9b kann auch ein Aktivkohlefilter angeordnet sein.

In der zweiten Leitung 4 ist ein als Wärmetauscher ausgebildetes Heizelement 8 angeordnet. In dem Wärmetauscher 8 ist eine Rohrschlange 8a angeordnet, durch welche die mit Luft durchsetzte Milch M geleitet wird. Im Inneren des Wärmetauschers 8 ist ein auf eine vorbestimmte Temperatur erhitzter Wärmeträger angeordnet, der seine Wärme über die Rohrschlange 8a an die durch die Rohrschlange 8a geleitete Milch M abgibt.

In der zweiten Leitung 4 ist des Weiteren ein Magnetventil 10 angeordnet, mittels dem der Milchfluss unterbrochen werden kann.

In der Auslassdüse 5 ist ein Element 7 angeordnet, welches Durchlässe hat, welche in wenigstens zwei in Fließrichtung der Milch in einem Abstand hintereinander angeordnete Ebenen angeordnet sind, und durch welches aufgeschäumte Milch geleitet wird. Die Auslassdüse 5 ist zweigeteilt, wobei ein Teil an der Trennstelle eine Ausnehmung aufweist, in der das Element 7 angeordnet ist. Hierdurch lässt sich das Element 7 auf einfache Weise aus der Auslassdüse 5 entfernen beziehungsweise in der Auslassdüse 5 anordnen. Das Element 7 besteht im Wesentlichen aus porösem Kunststoff, der auf der Basis von Zuckern hergestellt wurde. Das Element 7 kann nach dem Gebrauch umweltfreundlich entsorgt werden, weil es langfristig von darin zurückgebliebenen Milchsäurebakterien zersetzt bzw. abgebaut wird. Dem porösen Kunststoff sind Aktivkohle und Silberpartikel beigemischt, welche dem Element 7 antibakterielle Eigenschaften verleihen. Die Silberpartikel haften indirekt über die Aktivkohle an der Oberfläche des Kunststoffs, insbesondere in den Poren des Kunststoffs.

Zur Steuerung der Vorrichtung ist eine Steuerung 11 vorgesehen, welche einerseits mit einem Drucktaster 12 sowie einem als Potentiometer 13 ausgebildeten Sollwertgeber verbunden ist und andererseits mit einem Steuereingang 9a des einstellbaren Ventils 9, einem Steuereingang 2a der Pumpe 2 sowie einem Steuereingang 10a des Magnetventils 10 verbunden ist.

Durch Betätigen des Tasters 12 wird der Steuerung 11 mitgeteilt, dass eine Portion Milchschaum hergestellt werden soll. Die Steuerung 11 bewirkt aufgrund dessen, dass die Pumpe 2 betätigt sowie das Magnetventil 10 geöffnet wird. Die Pumpe 2 pumpt somit Milch aus dem Vorratsbehälter 1 durch die Rohrschlange 8a, wodurch die Milch erwärmt wird, zur Auslassdüse 5. Dadurch, dass die Milch durch die Venturi-Düse 6 fließt, gelangt über die Luftzuführleitung 6a Luft in die Milch und durchsetzt diese mit Luft. Die Menge der Luft kann durch das Potentiometer 13 eingestellt werden, welches einen Sollwert an die Steuerung 11 liefert und die Steuerung 11 veranlasst, das einstellbare Ventil 9 in eine entsprechende Stellung zu bringen.

Statt die Pumpe 2, das Magnetventil 10 sowie das einstellbare Ventil 9 mittels der Steuerung 11 zu steuern, könnte die Pumpe 2 und das Magnetventil 10 auch direkt mittels des Drucklasters 12 gesteuert werden. Die Pumpe 2 und das Magnetventil 10 würden dann parallel betrieben werden, sodass die Pumpe 2 dann läuft, wenn das Magnetventil 10 geöffnet ist. Das einstellbare Ventil 9 könnte so ausgebildet sein, dass der Luftdurchfluss mittels einer Stellschraube eingestellt werden kann, wobei das Ventil 9 dann derart angeordnet ist, dass die Stellschraube ohne Demontage von Bauelementen oder Teilen der Verkleidung erreichbar ist.

Die mit Luft durchsetzte Milch wird im Wärmetauscher 8 erhitzt, wodurch sie weiter aufschäumt. Die weiter aufgeschäumte Milch wird in der Auslassdüse 5 durch das Element 7 der Auslassdüse 5 gepresst. Hierdurch verfeinert sich der Milchschaum, entsprechend der Weite der Durchlässe des Elements 7, da die im Milchschaum enthaltenen Lufteinschlüsse von der Weite der Durchlässe und vom Abstand der Ebenen abhängen.

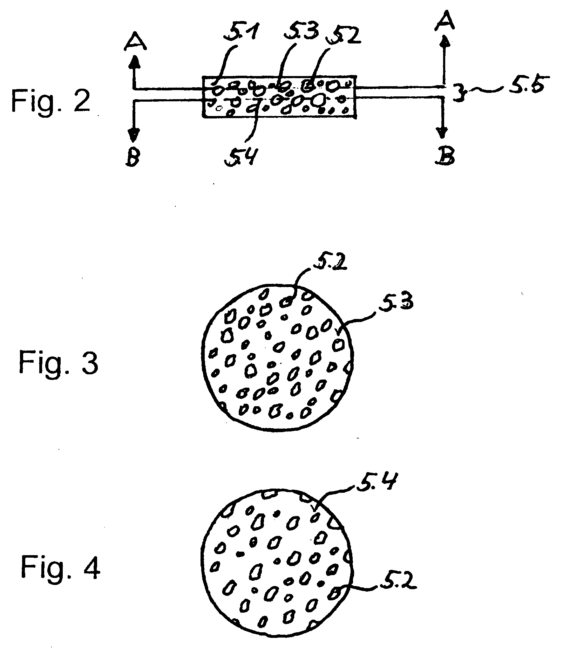

In den Figuren 2 bis 4 ist ein in der Auslassdüse 5 angeordnetes Element 7 dargestellt, welches aus einer porösen Kunststoffscheibe 5.1 besteht. Dadurch, dass die Kunststoffscheibe porös ist, ergibt sich, dass in zwei in einem Abstand 5.5 voneinander angeordneten Ebenen 5.3, 5.4 Poren 5.2 angeordnet sind, die als Durchlässe dienen. Die Porenweite beträgt etwa 70 bis 100 Mikrometer. Die Kunststoffscheibe 5.1 besteht aus einem Kunststoff, der auf der Basis von Zuckerrüben hergestellt Worden ist. Hierdurch hat der Kunststoff antibakterielle Eigenschaften.

## Patentansprüche

1. Vorrichtung zum Schäumen einer Flüssigkeit, mit einem Vorratsbehälter (1) für die Flüssigkeit, der über eine erste Leitung (3) mit einer Pumpe (2) verbunden ist, wobei zwischen dem Vorratsbehälter (1) und der Pumpe (2) eine Venturi-Düse (6) in der ersten Leitung angeordnet ist, mittels welcher die Flüssigkeit mit Luft durchsetzbar ist, wobei die Pumpe (2) an ihrer Druckseite über eine zweite Leitung (4), in der ein als Wärmetauscher ausgebildetes Heizelement (8) angeordnet ist, mit einer Auslassdüse (5) verbunden ist, aus der die mit Luft durchsetze Flüssigkeit austritt, **dadurch gekennzeichnet, dass** die Auslassdüse (5) ein Element (7; 5.1) aufweist, welches Durchlässe (5.2) hat, welche in wenigstens zwei in Fließrichtung der Flüssigkeit in einem Abstand (5.5) hintereinander angeordneten Ebenen (5.3, 5.4) angeordnet sind, und dass das Element (5.1) aus einem einen porösen Kunststoff enthaltenden porösen Material besteht, das antibakterielle Eigenschaften hat.

2. Vorrichtung nach Anspruch 1, **dadurch gekennzeichnet, dass** die Porenweite des Elements (5.1) 5 bis 500 Mikrometer, insbesondere 45 bis 300 Mikrometer, vorzugsweise 70 bis 100 Mikrometer beträgt.

3. Vorrichtung nach Anspruch 1 oder 2, **dadurch gekennzeichnet, dass** das poröse Element (5.1) einen porösen Werkstoff und Silberpartikel enthält.

4. Vorrichtung nach einem der Ansprüche 1 bis 3, **dadurch gekennzeichnet, dass** das Element (5.1) Aktivkohle enthält, und dass die Silberpartikel bevorzugt an der Aktivkohle anhaften.

5. Vorrichtung nach einem der Ansprüche 1 bis 4, **dadurch gekennzeichnet, dass** das Element (5.1) im Wesentlichen aus thermoplastischer Stärke, einem Zellulosewerkstoff, Polymilchsäure, Polyhydroxybuttersäure und/oder einem auf der Basis von Zuckern hergestellten Kunststoff besteht.

## Claims

1. Device for foaming a liquid, with a storage container (1) for the liquid, which storage container (1) is connected to a pump (2) via a first conduit (3), wherein a Venturi nozzle (6) is arranged in the first conduit between the storage container (1) and the pump (2), by means of which Venturi nozzle (6) the liquid can be aerated, wherein the delivery side of the pump (2) is connected via a second conduit (4), in which a heating element (8) is arranged as heat exchanger, to an outlet nozzle (5) from which the aerated liquid emerges, **characterized in that** the outlet nozzle (5) has an element (7; 5.1) with passages (5.2) which are arranged in at least two planes (5.3, 5.4) arranged at a distance (5.5) one behind the other in the direction of flow of the liquid, and **in that** the element (5.1) is made from a porous material which contains a porous plastic and which has antibacterial properties.

2. Device according to Claim 1, **characterized in that** the pore width of the element (5.1) is 5 to 500 micrometres, in particular 45 to 300 micrometres, preferably 70 to 100 micrometres.

3. Device according to Claim 1 or 2, **characterized in that** the porous element (5.1) contains a porous material and silver particles.

4. Device according to one of Claims 1 to 3, **characterized in that** the element (5.1) contains activated carbon, and **in that** the silver particles preferably adhere to the activated carbon.

5. Device according to one of Claims 1 to 4, **characterized in that** the element (5.1) is made mainly from thermoplastic starch, a cellulose material, polylactic acid, polyhydroxybutyric acid and/or a plastic produced on the basis of sugars.

## Revendications

1. Dispositif pour le moussage d'un liquide, présentant un réservoir (1) pour le liquide, qui est relié via une première conduite (3) à une pompe (2), une tuyère de Venturi (6) étant disposée dans la première conduite entre le réservoir (1) et la pompe (2), au moyen de laquelle le liquide peut être traversé par de l'air, la pompe (2) étant reliée, côté pression, via une deuxième conduite (4), dans laquelle est disposé un élément chauffant (8) conçu comme un échangeur thermique, à une buse de sortie (5), de laquelle sort le liquide traversé par de l'air, **caractérisé en ce que** la buse de sortie (5) présente un élément (7 ; 5.1) qui présente des passages (5.2), qui sont disposés dans au moins deux plans (5.3, 5.4), disposés à une certaine distance (5.5) l'un derrière l'autre dans le sens d'écoulement du liquide, et **en ce que** l'élément (5.1) est constitué par un matériau poreux qui présente des propriétés antibactériennes, contenant un matériau synthétique poreux.

2. Dispositif selon la revendication 1, **caractérisé en ce que** la largeur des pores de l'élément (5.1) est de 5 à 500 micromètres, en particulier de 45 à 300 micromètres, de préférence de 70 à 100 micromètres.

3. Dispositif selon la revendication 1 ou 2, **caractérisé en ce que** l'élément poreux (5.1) contient un matériau poreux et des particules d'argent.

4. Dispositif selon l'une quelconque des revendications 1 à 3, **caractérisé en ce que** l'élément (5.1) contient du charbon actif et **en ce que** les particules d'argent adhèrent de préférence au charbon actif.

5. Dispositif selon l'une quelconque des revendications 1 à 4, **caractérisé en ce que** l'élément (5.1) est essentiellement constitué par de l'amidon thermoplastique, un matériau cellulosique, du poly(acide lactique), du poly(acide hydroxybutyrique) et/ou un matériau synthétique produit à base de sucres.
